# EUROPEAN PATENT APPLICATION

(11) **EP 4 066 946 A1**
(43) Date of publication of application: **05.10.2022**
(21) Application number: 22156363.8
(22) Date of filing: 11.02.2022
(51) Int. Cl.: B05B 12/00

(54) **COATING CONTROL SYSTEM, COATING CONTROL APPARATUS, SETTING APPARATUS OF COATING CONTROL APPARATUS, SETTING METHOD OF COATING CONTROL APPARATUS, AND PROGRAM**

(30) Priority: 26.02.2021 JP 2021030500
(71) Applicant: Kabushiki Kaisha Yaskawa Denki, Kitakyushu-shi, Fukuoka 806-0004 (JP)
(72) Inventor: NAKATA, Tatsuya, Kitakyushu-shi, Fukuoka, 806-0004 (JP); KIKUCHI, Kenta, Kitakyushu-shi, Fukuoka, 806-0004 (JP); WATANABE, Yuki, Kitakyushu-shi, Fukuoka, 806-0004 (JP); TAJIMA, Sho, Kitakyushu-shi, Fukuoka, 806-0004 (JP); ITO, Tsuyoshi, Kitakyushu-shi, Fukuoka, 806-0004 (JP)
(74) Representative: Viering, Jentschura & Partner mbB Patent- und Rechtsanwälte

(57) **Abstract**

A setting apparatus includes a selection unit configured to select based on a user input a control target apparatus among a plurality of coating apparatuses which include different devices; a parameter setting unit configured to specify a setting parameter that is to be set by a user according to a result by the selection unit and set a value of the setting parameter based on a user input; and a setting transmission unit configured to transmit the result by the selection unit and a setting result by the parameter setting unit to a coating control apparatus which is configured to control the plurality of coating apparatuses.

## Description

### FIELD OF THE INVENTION

The present disclosure relates to a coating control system, a coating control apparatus, a setting apparatus of the coating control apparatus, a setting method of the coating control apparatus, a program, and a non-transitory computer readable storage medium.

### DISCUSSION OF THE BACKGROUND

Japanese Patent Application Laid-Open No. 2019-192131 discloses an analysis apparatus for analyzing a cause of occurrence of a coating particle which is a coating defect appearing as a protrusion on a coating surface.

### SUMMARY OF THE INVENTION

According to one aspect of the present invention, a setting apparatus includes a selection unit configured to select based on a user input a control target apparatus among a plurality of coating apparatuses which include different devices; a parameter setting unit configured to specify a setting parameter that is to be set by a user according to a result by the selection unit and set a value of the setting parameter based on a user input; and a setting transmission unit configured to transmit the result by the selection unit and a setting result by the parameter setting unit to a coating control apparatus which is configured to control the plurality of coating apparatuses.

According to another aspect of the present invention, a coating control apparatus includes a setting reception unit configured to acquire, from a setting apparatus, information indicating a control target apparatus and a setting parameter; and an operation control unit configured to control the control target apparatus based on the value of the setting parameter.

According to further aspect of the present invention, a setting method of a coating control apparatus includes selecting based on a user input a control target apparatus among a plurality of coating apparatuses which include different devices; determining a setting parameter according to the control target apparatus; setting a value of the setting parameter based on a user input; and transmitting a selection result of the control target apparatus and a setting result of the setting parameter to the coating control apparatus which is configured to control the plurality of coating apparatuses.

According to the above aspects, there are provided a coating control system, a coating control apparatus, a setting apparatus, a control system including the coating control apparatus and the setting apparatus, a setting method of the coating control apparatus, and a program including the setting method, which are useful for simplifying setting work for control.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 is a schematic diagram illustrating an example of a configuration of a coating facility.
FIG. 2 is a block diagram illustrating an example of a structure of the control system.
FIG. 3 is a block diagram illustrating an example of a hardware configuration of the control system.
FIG. 4 is a sequence diagram showing an example of a setting method by the setting apparatus.
FIG. 5 is a schematic diagram showing an example of an input image for setting.
FIGS. 6A and 6B are schematic diagrams illustrating an example of an input/output setting image.
FIG. 7 is a schematic diagram showing an example of an input image for operation setting.
FIG. 8 is a schematic diagram showing an example of an input image for setting collection data.
FIG. 9 is a flowchart illustrating an example of a control method performed by the coating control apparatus.
FIG. 10 is a flowchart illustrating an example of a monitoring method performed by the monitoring apparatus.
FIG. 11 is a block diagram showing another example of a structure of the control system.

### DESCRIPTION OF THE EMBODIMENTS

Hereinafter, an embodiment will be described with reference to the drawings. In the description, the same elements or elements having the same functions are denoted by the same reference numerals, and redundant description will be omitted.

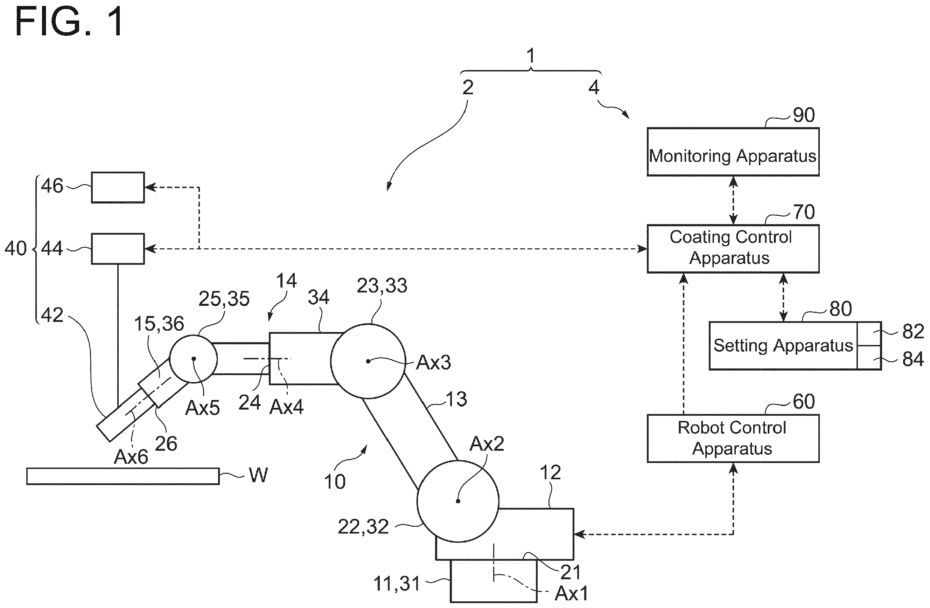

A coating facility 1 shown in FIG. 1 includes a coating target (hereinafter, referred to as a "workpiece W"). The present invention relates to an apparatus for automatically performing at least a part of coating work. In addition to the coating operation, the coating facility 1 may record and monitor the result of the coating operation. The workpiece W may be any industrial product or a part thereof, and specific examples thereof include a body of an automobile and a case of a mobile phone. The coating facility 1 includes a coating system 2 and a control system 4 (coating control system).

### [Coating System 2]

The coating system 2 is a system that performs coating on a workpiece W. The coating system 2 includes a robot 10 and a coating apparatus 40. Some devices of the robot 10 and the coating apparatus 40 may be disposed in an area (coating booth) partitioned for performing a coating operation.

The robot 10 is, for example, a six-axis vertical articulated robot, and includes a base portion 11, a turning portion 12, a first arm 13, a second arm 14, a wrist portion 15, and an actuator 31, 32, 33, 34, 35, 36.

The base portion 11 may be fixed to a floor surface, a pedestal having a linear motion mechanism, or the like, or may be installed on a side wall or a ceiling forming the coating booth. The robot 10 may include a holding unit that holds the workpiece W while adjusting the posture of the workpiece W, and the base portion 11 may be provided on the holding unit. The turning portion 12 is provided on the base portion 11 and is rotatable about a vertical axial line Ax1. That is, the robot 10 includes the joint 21 that allows the turning portion 12 to turn around the axial line Ax1.

The first arm 13 extends from the turning portion 12 and is rotatable about an axial line Ax1 intersecting (for example, orthogonal to) the axial line Ax2. That is, the robot 10 includes the joint 22 that allows the first arm 13 to rotate around the axial line Ax2. It should be noted that the crossing here includes crossing in a state of being in a twisted relationship with each other like a so-called solid crossing. The same applies to the following.

The second arm 14 extends from a tip portion of the first arm 13 and is rotatable about an axial line Ax1 intersecting (for example, orthogonal to) the axial line Ax3. That is, the robot 10 includes the joint 23 that allows the second arm 14 to rotate around the axial line Ax3. The axial line Ax3 may be parallel to the axial line Ax2. The tip portion of the second arm 14 is rotatable about an axial line Ax3 intersecting (for example, orthogonal to) the axial line Ax4 along the extending direction of the second arm 14. That is, the robot 10 includes the joint 24 that allows the tip portion of the second arm 14 to rotate around the axial line Ax4.

The wrist portion 15 extends from a tip portion of the second arm 14 and is rotatable about an axial line Ax4 intersecting (for example, orthogonal to) the axial line Ax5. That is, the robot 10 has the joint 25 that allows the wrist portion 15 to rotate around the axial line Ax5. A tool to be operated is provided at a tip portion of the wrist portion 15, and the tool is rotatable around an axial line Ax5 intersecting (for example, orthogonal to) the axial line Ax6 along an extending direction of the wrist portion 15. That is, the robot 10 includes the joint 26 that allows the tool to be operated to rotate around the axial line Ax6. The tool to be operated is a coating device 42 (described later) that functions as a gun for discharging the coating material.

The actuators 31, 32, 33, 34, 35, 36 drive each of the joints 21, 22, 23, 24. 25, 26. For example, the actuators 31 rotate the turning portion 12 about the axial line Ax1, the actuator 32 rotates the first arm 13 about the axial line Ax2, and the actuator 33 rotates the second arm 14 about the axial line Ax3. The actuator 34 rotates the tip portion of the second arm 14 around the axial line Ax4, the actuator 35 rotates the wrist portion 15 around the axial line Ax5, and the actuator 36 rotates the tool to be operated around the axial line Ax6.

The robot 10 can be configured in any manner as long as the position and orientation of the tool to be operated (the position and orientation with respect to the workpiece W) can be changed within a desired range. For example, the robot 10 may be a seven-axis vertical articulated robot in which redundant axis is added to the six-axis vertical articulated robot described above.

The coating apparatus 40 is an apparatus that supplies coating material to the workpiece W in conjunction with the robot 10. The coating apparatus 40 may discharge the coating material by any method, and specific examples thereof include a method using a spray gun, a method using a so-called bell gun having a bell cup (rotary atomizing head), and a method using a bell gun to which a coating material cartridge is attached. The coating apparatus 40 includes, for example, a coating device 42, a driving device 44, and a peripheral device 46.

The coating device 42 is a coating gun that discharges a coating material. The coating device 42 is attached to the tip end of the wrist portion 15 of the robot 10. Thus, the position and orientation of the coating device 42 with respect to the workpiece W are changed by the operation of the robot 10. When the coating device 42 is a bell gun, the coating device 42 includes, for example, a bell cup and an air-driven motor that rotates the bell cup.

The driving device 44 is a device that drives the coating device 42 so that the coating material is discharged. The coating apparatus 40 may include a plurality of driving devices 44. The plurality of driving devices 44 include, for example, a device that supplies paint to the coating device 42, a device that supplies fluid for discharging paint from the coating device 42, a device that supplies air to a motor, and a device that applies voltage to at least one of the coating device 42 and the workpiece W. A part of the driving device 44 may be provided in the coating booth, for example, may be provided on an arm of the robot 10. Another part of the driving device 44 may be provided outside the coating booth.

The peripheral device 46 is a device for assisting the coating work by the coating device 42 and the driving device 44. The coating apparatus 40 may include a plurality of peripheral devices 46. The plurality of peripheral devices 46 include, for example, a device for transporting a cartridge mounted on a cartridge bell gun, a device for adjusting temperature or humidity in a coating booth, and a device for adjusting an air flow in the coating booth.

The coating device 42, the driving device 44, and the peripheral device 46 include various devices to be controlled by the control system 4. The devices to be controlled include at least devices that operate based on an operation command from the control system 4. The devices to be controlled may include a device that outputs a sensor value to the control system 4 and a device controller that executes control based on an operation command from the control system 4. In the present disclosure, devices to be controlled by the control system 4 are collectively referred to as "constituent devices 50". That is, the coating apparatus 40 includes a plurality of constituent devices 50.

Specific examples of the constituent device 50 include a valve, an electropneumatic regulator, a servo motor, a controller that controls a power supply that applies a voltage, a pressure sensor, a rotation sensor (fiber sensor), and a flow rate sensor. The valve may be a solenoid valve or an air operation valve, and specific examples thereof include a valve that switches a discharge state (ON/OFF) of the coating material and a valve that switches a supply state (ON/OFF) of a fluid such as air. The valve transitions to an open state (closed state), for example, in response to a control command value indicating a transition to an open state (closed state). The electropneumatic regulator regulates, for example, the pressure of air for rotating a motor in the bell gun according to the control command value. The coating apparatus 40 may include a plurality of constituent devices 50 of the same type, and these constituent devices 50 may be used for different purposes. The constituent device 50 described above is an example and may be any type of device as long as it is a device to be controlled by the control system 4.

### [Control System 4]

The control system 4 is a system that controls the coating system 2 so as to perform coating on the workpiece W, and records and monitors the result of the coating operation performed by the coating system 2. As illustrated in FIG. 1, the control system 4 includes, for example, a robot control apparatus 60, a coating control apparatus 70, a setting apparatus 80, and a monitoring apparatus 90. A robot control apparatus 60, a setting apparatus 80, and a monitoring apparatus 90 are communicably connected to the coating control apparatus 70. Each device will be described in detail below.

### (Robot control apparatus)

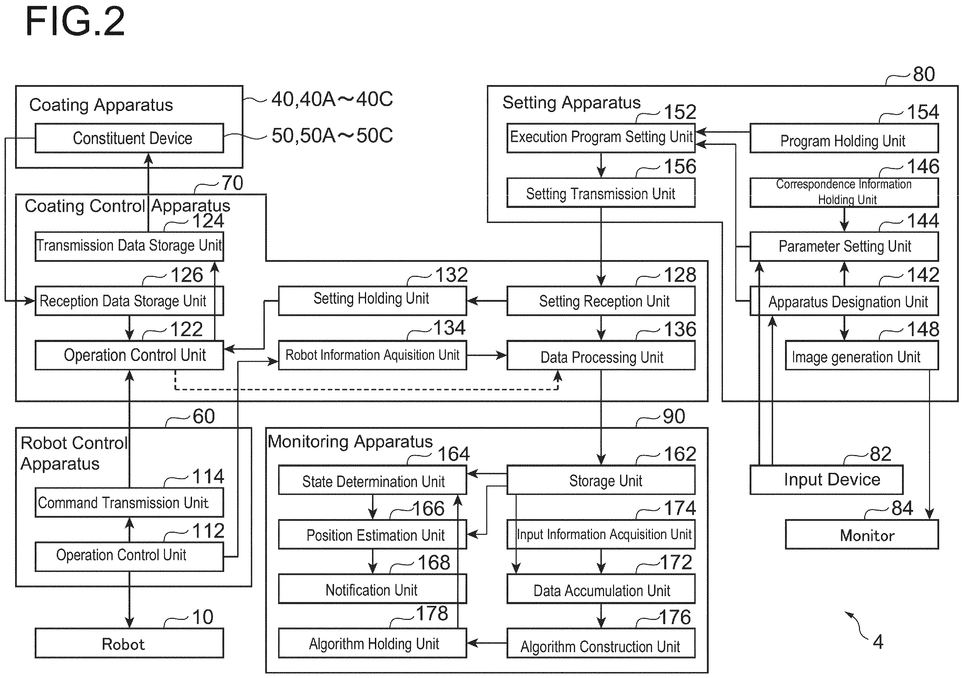

The robot control apparatus 60 is a controller that controls the robot 10. The robot control apparatus 60 controls the robot 10 such that the coating material discharged by the coating apparatus 40 adheres to the workpiece W. The robot control apparatus 60 has a structure (hereinafter, referred to as a "module"). For example, as illustrated in FIG. 2, an operation control unit (an example of "operation control circuitry") 112 and a command transmission unit 114 are provided. The processes executed by these modules correspond to the processes executed by the robot control apparatus 60.

The operation control unit 112 changes the position and orientation of the coating device 42 with respect to the workpiece W so that the coating material discharged by the coating device 42 of the coating apparatus 40 is supplied to (adheres to) the workpiece W. In one example, a plurality of coating paths representing a locus of a region to which the coating material is applied are set in advance on the workpiece W. The operation control unit 112 changes the position and the posture of the coating device 42 so that the adhesion region of the coating material discharged from the coating device 42 moves along the coating path. Specifically, the operation control unit 112 calculates the target angles of the actuators 31 to 36 by inverse kinematics calculation based on the target position and the target posture of the coating device 42 determined so that the coating material is supplied along the coating path. Then, the operation control unit 112 controls each actuator so that the angle of each of the actuators 31 to 36 follows the calculated target angle.

The command transmission unit 114 transmits a discharge command to the coating control apparatus 70. For example, when (immediately before) coating is started in one coating path, the command transmission unit 114 transmits a command indicating the start of discharge to the coating control apparatus 70. After coating for one coating path is started and before the coating is ended, the command transmission unit 114 transmits a command indicating the stop of discharge to the coating control apparatus 70. The discharge command may include at least one of information indicating a color used for coating and information indicating a level of a discharge amount of the coating material.

### (Coating control apparatus)

The coating control apparatus 70 is a controller that controls the coating apparatus 40. The coating control apparatus 70 is configured to be capable of controlling a plurality of types of coating apparatuses 40. The plurality of types of coating apparatuses 40 have mutually different constituent devices 50. That is, the plurality of constituent devices 50 included in one type of coating apparatus 40 are different from the plurality of constituent devices 50 included in another type of coating apparatus 40. In one example, in the plurality of types of coating systems 2, at least the types of the coating devices 42 are different from each other, and coating is performed by different methods.

Hereinafter, a case where the coating control apparatus 70 can control three types of coating apparatuses 40 will be exemplified, and the three types of coating apparatuses 40 will be referred to as a coating apparatus 40A, a coating apparatus 40B, and a coating apparatus 40C, respectively. The coating apparatus 40A, the coating apparatus 40B, and the coating apparatus 40C are different types of apparatuses. A plurality of constituent devices 50 (hereinafter, referred to as "constituent device 50A") included in the coating apparatus 40A is different from a plurality of constituent devices 50 (hereinafter, referred to as "constituent device 50B") included in the coating apparatus 40B. The plurality of constituent devices 50A included in the coating apparatus 40A is different from a plurality of constituent devices 50 (hereinafter referred to as "constituent device 50C") included in the coating apparatus 40C.) In the present disclosure, the case where the plurality of constituent devices is different from each other among the coating apparatuses includes a case where all of the plurality of constituent devices are different and a case where some of the plurality of constituent devices are different.

The coating control apparatus 70 acquires information of a device to be used (the coating apparatus to be controlled) and setting information corresponding to the device from the setting apparatus 80, and controls the coating apparatus to be controlled based on the information. The coating control apparatus 70 includes, for example, as modules, an operation control unit 122, a plurality of transmission data storage units (an example of "transmission data storages") 124, a plurality of reception data storage units (an example of "reception data storages") 126, a setting reception unit (an example of "setting reception circuitry") 128, a setting holding unit 132, a robot information acquisition unit 134, and a data processing unit 136. The processes executed by these modules correspond to the processes executed by the coating control apparatus 70. In FIG. 2, one transmission data storage unit 124 of the plurality of transmission data storage units 124 is shown, and one reception data storage unit 126 of the plurality of reception data storage units 126 is shown.

Based on the information set by the setting apparatus 80, the operation control unit 122 controls one coating apparatus 40 to be controlled (hereinafter, referred to as a "control target apparatus ") among the plurality of types of coating apparatuses 40. The control target apparatus is the coating apparatus 40 instructed by the setting apparatus 80, and is the coating apparatus 40 of the target type to be actually operated. For example, the operation control unit 122 controls the control target apparatus in accordance with one or more control programs set by the setting apparatus 80. The operation control unit 122 controls the coating device 42 so as to be interlocked with the robot 10 in response to a discharge command from the robot control apparatus 60 (command transmission unit 114) that controls the robot 10 that changes the position and orientation of the coating device 42.

The transmission data storage units 124 store (temporarily hold) transmission data to be transmitted to the control target apparatus . In the plurality of transmission data storage units 124, a control command value from the operation control unit 122 to the constituent device 50 is stored as transmission data. Specifically, based on the information set by the setting apparatus 80, the constituent devices 50 included in the control target apparatus (the constituent devices 50 to which the control command values are transmitted) are allocated to the transmission data storage units 124. That is, one of the constituent devices 50 is allocated to one transmission data storage unit 124, and the control command value to the constituent device 50 is stored. The transmission data stored in the transmission data storage unit 124 is transmitted to the corresponding constituent device 50 of the control target apparatus.

The plurality of reception data storage units 126 store (temporarily hold) reception data from the control target apparatus. Sensor values acquired from the constituent devices 50 are stored as received data in the plurality of reception data storage units 126. Specifically, based on the information set by the setting apparatus 80, the plurality of constituent devices 50 (the plurality of constituent devices 50 that output sensor values) included in the control target apparatus are allocated to the plurality of reception data storage units 126. That is, one of the constituent devices 50 is allocated to one reception data storage unit 126, and a sensor value from the constituent device 50 is stored. The sensor value output from the constituent device 50 of the control target apparatus is transmitted to the corresponding reception data storage unit 126.

The transmission data storage unit 124 and the reception data storage unit 126 function as a communication unit that transmits and receives data to and from the control target apparatus. When controlling the control target apparatus, the operation control unit 122 writes the control command value to the transmission data storage unit 124 and reads the sensor value from the reception data storage unit 126. Specifically, when outputting the control command value to one constituent device 50 of the control target apparatus, the operation control unit 122 writes the control command value to the transmission data storage unit 124 allocated to the constituent device 50. When receiving a sensor value from one constituent device 50 of the control target apparatus, the operation control unit 122 reads the sensor value from the reception data storage unit 126 allocated to the constituent device 50.

The setting reception unit 128 acquires, from the setting apparatus 80, designation information indicating which of the plurality of types of coating apparatuses 40 is designated as the control target apparatus and setting information set by the setting apparatus 80. The setting information includes information indicating a storage unit, among the plurality of transmission data storage units 124, into which the control command value to each constituent device 50 included in the control target apparatus is written. The setting information includes information indicating a storage unit from which a sensor value is read from each constituent device 50 included in the control target apparatus among the plurality of reception data storage units 126. The setting information indicates an item (hereinafter, referred to as a "target data item") for which data is acquired (collected). However, the present invention is not limited thereto. The setting information includes values of parameters set by the user. The setting information may include one or more control programs set in accordance with the control target apparatus. The setting holding unit 132 holds designation information and setting information acquired from the setting apparatus 80.

The robot information acquisition unit 134 acquires data (hereinafter, referred to as "robot data") indicating an operation state of the robot 10 interlocked with the coating device 42 of the control target apparatus from the robot control apparatus 60. The robot information acquisition unit 134 may acquire, for each predetermined cycle, robot data indicating an operation state of the robot 10 in the cycle from the operation control unit 112 of the robot control apparatus 60. Each time coating is performed on one coating path, the robot information acquisition unit 134 may acquire, from the operation control unit 112 of the robot control apparatus 60, robot data indicating an operation state of robot 10 at the time of performing coating on the coating path.

The data processing unit 136 receives data (hereinafter, referred to as "coating data") indicating an operation state of the coating device 42 of the control target apparatus.) and the robot data acquired by the robot information acquisition unit 134 are stored in the storage unit in association with each other. The coating data may include data corresponding to the target data item indicated by the setting information. The storage unit in which data is stored by the data processing unit 136 may be provided inside the coating control apparatus 70 or may be provided outside the coating control apparatus 70. In one example, the data processing unit 136 associates the coating data with the robot data, and then stores the data in a storage unit 162 (a storage unit 162 described later) included in the monitoring apparatus 90.

The data processing unit 136 may associate the robot data obtained by the robot information acquisition unit 134 in a predetermined cycle with the coating data indicating the operation state of the coating device 42 in the cycle as data in the cycle. Each time coating is performed on one coating path, the data processing unit 136 may associate the robot data on the coating path with the coating data indicating the operation state of the coating device 42 at the time of performing coating on the coating path as data at the time of performing coating on the coating path.

### (Setting apparatus)

The setting apparatus 80 is a computer that performs various settings for control by the coating control apparatus 70 based on a user input. The user performs various settings for control using the setting apparatus 80 before causing the coating control apparatus 70 to control the control target apparatus to execute coating on the workpiece W. The control system 4 may comprise an input device 82 and a monitor 84 connected to the setting apparatus 80.

The input device 82 is a device for inputting information to the setting apparatus 80 (computer main body). More specifically, the input device 82 inputs input information indicating settings made by the user to the setting apparatus 80. The input device 82 may be any device capable of inputting desired information, and specific examples thereof include a keyboard, an operation panel, a mouse, and the like.

The monitor 84 is a device for displaying information output from the setting apparatus 80 (computer main body). When information from the setting apparatus 80 is displayed on the monitor 84, the user can confirm the information. The monitor 84 may be any monitor as long as it can display information on a screen, and a specific example thereof includes a liquid crystal panel. The setting apparatus 80, the input device 82, and the monitor 84 may constitute a single computer device.

The setting apparatus 80 includes, for example, as modules, an apparatus designation unit (an example of "selection circuitry" or "selection unit") 142, a parameter setting unit (an example of "parameter setting circuitry") 144, a correspondence information holding unit 146, an image generation unit (an example of "image generation circuitry") 148, an execution program setting unit (an example of "execution program setting circuitry") 152, a program holding unit 154, and a setting transmission unit (an example of "setting transmission circuitry") 156. The processes executed by these modules correspond to the processes executed by the setting apparatus 80.

The apparatus designation unit 142 designates any one of the plurality of types of coating apparatuses 40 as the control target apparatus based on a user input indicating which of the plurality of types of coating apparatuses 40 is to be used. In one example, when there is a user input indicating that the coating apparatus 40A is to be used, the apparatus designation unit 142 designates the coating apparatus 40A as the control target apparatus. Similarly, when there is a user input indicating that the coating apparatus 40B (coating apparatus 40C) is to be used, the apparatus designation unit 142 designates the coating apparatus 40B (coating apparatus 40C) as the control target apparatus. The apparatus designation unit 142 displays an image (hereinafter referred to as an "input image 300") displayed on the monitor 84. The control target apparatus may be designated based on a user input to the control target apparatus.

The parameter setting unit 144 specifies a parameter that can be set by the user according to the designation result by the apparatus designation unit 142. Hereinafter, a parameter specified as being settable by the user is referred to as a "setting parameter". The parameter setting unit 144 may specify a plurality of setting parameters according to a device instructed to the control target apparatus. The setting parameter is a variable that defines various conditions and the like for controlling the control target apparatus, and a value (argument) can be set. The value of the setting parameter may be a physical quantity, an address, or an item number indicating a category or a group.

When the control target apparatus is different, the setting parameter that can be set by the user is also different. That is, the setting parameter corresponding to the coating apparatus 40A exists, the setting parameter corresponding to the coating apparatus 40B exists, and the setting parameter corresponding to the coating apparatus 40C exists. The parameter setting unit 144 may specify the setting parameter corresponding to the designation result by the apparatus designation unit 142 by referring to correspondence information in which each of the plurality of types of coating apparatuses 40 is associated with a settable parameter in advance.

The parameter setting unit 144 sets the value of the setting parameter specified according to the designation of the control target apparatus based on the user input indicating the setting value of the parameter. The parameter setting unit 144 may set the value of the setting parameter based on a user input to the input image 300 displayed on the monitor 84. The parameter setting unit 144 also functions as an item setting unit that sets a target data item. The parameter setting unit 144 (item setting unit) specifies a plurality of types of data items selectable by the user in accordance with the designation result by the apparatus designation unit 142. The parameter setting unit 144 (item setting unit) sets a target data item from which data is to be acquired from a plurality of types of data items based on a user input indicating a target from which data is to be acquired.

The correspondence information holding unit 146 holds the correspondence information. The correspondence information held by the correspondence information holding unit 146 may be a table in which a parameter that can be set according to the coating apparatus 40A, a parameter that can be set according to the coating apparatus 40B, and a parameter that can be set according to the coating apparatus 40C are predetermined.

The image generation unit 148 generates (displays) an input image 300 for receiving a user input on the monitor 84. The image generation unit 148 may generate an input image 300 for inputting a value of the setting parameter according to the designation result by the apparatus designation unit 142. For example, the image generation unit 148 generates the input image 300 having different display contents depending on the designation result of the control target apparatus. In one example, the image generation unit 148 generates an input image 300 to which the value of the setting parameter corresponding to the coating apparatus 40A can be input, and generates an input image 300 to which the value of the setting parameter corresponding to the coating apparatus 40B can be input. In addition, the image generation unit 148 generates an input image 300 to which a value of the setting parameter corresponding to the coating apparatus 40C can be input.

The execution program setting unit 152 sets one or more control programs based on the designation result by the apparatus designation unit 142 and the setting result by the parameter setting unit 144. For example, the execution program setting unit 152 acquires a basic program corresponding to a designated coating apparatus 40 from a plurality of basic programs set in advance for a plurality of types of coating apparatuses 40. Then, the execution program setting unit 152 sets one or more control programs by correcting the basic program corresponding to the designated coating apparatus 40 based on the setting result by the parameter setting unit 144.

In one example, the constituent device 50 that is included in the control target apparatus and is a control target is determined for each basic program. Further, in the basic program, a large frame (main contents) of control contents for each constituent device 50 is defined. For example, in the basic program, various control contents are defined, and it is defined from which constituent device 50 a sensor value is acquired, to which constituent device 50 a control command value is transmitted, which constituent device 50 is controlled when an ejection command is received from the robot control apparatus 60, and the like. The basic program may include a parameter (can be set by the user (a part of the setting parameter). In this case, since the apparatus to be controlled is different for each basic program, the parameters that can be set on the basic program are also different.

The execution program setting unit 152 may generate one or more control programs by reflecting a setting result (a part of the setting result) obtained by the parameter setting unit 144 on a basic program corresponding to the control target apparatus . Alternatively, the execution program setting unit 152 may generate one or more control programs by selecting or generating a subroutine included in the basic program according to the setting result by the parameter setting unit 144.

The program holding unit 154 holds a plurality of basic programs respectively associated with the plurality of types of coating apparatuses 40. The program holding unit 154 holds, for example, a basic program associated with the coating apparatus 40A, a basic program associated with the coating apparatus 40B, and a basic program associated with the coating apparatus 40C. These basic programs may be created in advance before the setting stage by the setting apparatus 80. Alternatively, the program holding unit 154 may hold a basic program created at a setting stage (immediately before setting work of various parameters) by the setting apparatus 80. In this case, the program holding unit 154 may hold a basic program corresponding to one type of coating apparatus 40 (control target apparatus), and may not hold basic programs corresponding to other types of coating apparatuses 40.

The setting transmission unit 156 transmits the designation result by the apparatus designation unit 142 and the setting result by the parameter setting unit 144 to the coating control apparatus 70. For example, the setting transmission unit 156 transmits designation information indicating the control target apparatus designated by the apparatus designation unit 142 and setting information indicating the setting of the setting parameter set by the parameter setting unit 144 to the setting reception unit 128 of the coating control apparatus 70. The setting transmission unit 156 may transmit one or more control programs set by the execution program setting unit 152 to the setting reception unit 128. The setting transmission unit 156 may transmit these pieces of information to the setting reception unit 128 based on a transmission instruction from the user.

The setting transmission unit 156 transmits the designation information and the setting information to the setting reception unit 128, whereby the setting of the coating control apparatus 70 is completed. The operation control unit 122 of the coating control apparatus 70 controls the control target apparatus indicated by the designation information based on at least the setting result by the parameter setting unit 144. The operation control unit 122 may control the control target apparatus in accordance with one or more control programs set by the execution program setting unit 152. Since the setting result by the parameter setting unit 144 is reflected in the one or more control programs, controlling the control target apparatus according to the one or more control programs corresponds to controlling the control target apparatus based on the setting result.

The monitoring apparatus 90 is a computer that records a result of a coating operation performed by the coating apparatus 40 by acquiring information from the coating control apparatus 70, and monitors a state (quality) of coating performed by the coating device 42 of the coating apparatus 40. For example, the monitoring apparatus 90 includes, as modules, a storage unit 162, a state determination unit 164, a position estimation unit 166, a notification unit 168, a data accumulation unit 172, an input information acquisition unit 174, an algorithm construction unit 176, and an algorithm holding unit 178. The processes executed by these modules correspond to the processes executed by the monitoring apparatus 90.

The storage unit 162 stores data (hereinafter, referred to as "correspondence data") in which coating data indicating an operation state of the coating device 42 and robot data indicating an operation state of the robot 10 are associated with each other. The storage unit 162 stores the correspondence data transmitted from the data processing unit 136. In the correspondence data stored in the storage unit 162, the coating data and the robot data are associated with each other for each predetermined cycle or each coating path.

The state determination unit 164 determines whether or not the state of coating performed by the coating device 42 is normal based on at least one of the coating data and the robot data stored in the storage unit 162. For example, the state determination unit 164 determines whether or not the state of the coating material supplied from the coating device 42 on the workpiece W is normal based on the coating data and the robot data. The state determination unit 164 may determine whether or not the state of coating in the cycle is normal based on the coating data and the robot data for each cycle in the correspondence data. The state determination unit 164 may determine whether or not the state of coating on the coating path is normal based on the coating data for each coating path and the robot data in the correspondence data.

In one example, the state determination unit 164 determines whether data indicating at least one of the coating data and the robot data (hereinafter, referred to as "operation data") is present. Alternatively, whether or not the state of coating is normal may be determined using a determination algorithm that outputs a determination result as to whether or not the state of coating performed by the coating device 42 is normal. The determination algorithm may be configured to output a determination result according to a comparison result between each data included in the operation data and a threshold value. The determination algorithm may be a determination model constructed by machine learning such that various kinds of data included in the operation data are input data and a determination result corresponding to the input data is output as output data. The operation data may be data including both the coating data and the robot data.

When the state determination unit 164 determines that the state of coating performed by the coating device 42 is not normal, the position estimation unit 166 calculates a position on the workpiece W at which the state of coating performed by the coating device 42 is estimated to be not normal based on the robot data stored in the storage unit 162. In the present disclosure, determining that the state of coating on the workpiece W is not normal corresponds to determining that the state of coating (the quality of coating) is abnormal.

The position estimation unit 166 calculates, based on the robot data, a position of an adhesion region of the coating material from the coating device 42 to the workpiece W when it is determined to be abnormal. Since the position of the adhesion region of the coating material on the workpiece W at that time is determined in accordance with the position and orientation of the coating device 42 with respect to the workpiece W, the position estimation unit 166 can calculate the position of the adhesion region from robot data (operation commands or operation results of the actuators 31 to 36).

The notification unit 168 notifies the determination result by the state determination unit 164 and the estimation result by the position estimation unit 166. When the state determination unit 164 determines that the coating state is abnormal, the notification unit 168 notifies the information indicating that the coating state is abnormal and the information indicating the position estimated (calculated) by the position estimation unit 166. A monitor (not illustrated) may be connected to the monitoring apparatus 90, and the notification unit 168 may display information indicating that the state of coating is abnormal and information indicating the position estimated by the position estimation unit 166 on the monitor.

The data accumulation unit 172 accumulates performance information in which operation data indicating at least one of coating data and robot data is associated with (an evaluation result of) a state of coating by the coating device 42 based on the operation data. The data accumulation unit 172 accumulates actual result information in a stage (phase) of constructing a determination algorithm. The state of coating by the coating device 42 based on the operation data is an evaluation result of the state of coating on the workpiece W and is evaluated by the user. For example, the state of coating performed by the coating device 42 based on the operation data is evaluated (classified) as either normal or abnormal by the user. The data accumulation unit 172 may accumulate the performance information from coating data obtained by performing coating on a plurality of workpieces W, robot data, and an evaluation result by a user.

The input information acquisition unit 174 acquires an evaluation result by a user regarding an actual state of coating by the coating device 42. An input device (not illustrated) may be connected to the monitoring apparatus 90, and the input information acquisition unit 174 acquires an evaluation result of an actual state of coating on the workpiece W based on input information from the input device.

The algorithm construction unit 176 constructs a determination algorithm based on the result information accumulated by the data accumulation unit 172. The algorithm construction unit 176 may construct a determination model that outputs a determination result of whether or not the state of coating is normal in response to an input of the operation data by performing machine learning using the result information as learning data. The algorithm construction unit 176 may construct, for each control target apparatus, a determination algorithm (determination model) corresponding to the apparatus. The algorithm holding unit 178 holds the determination algorithm constructed by the algorithm construction unit 176.

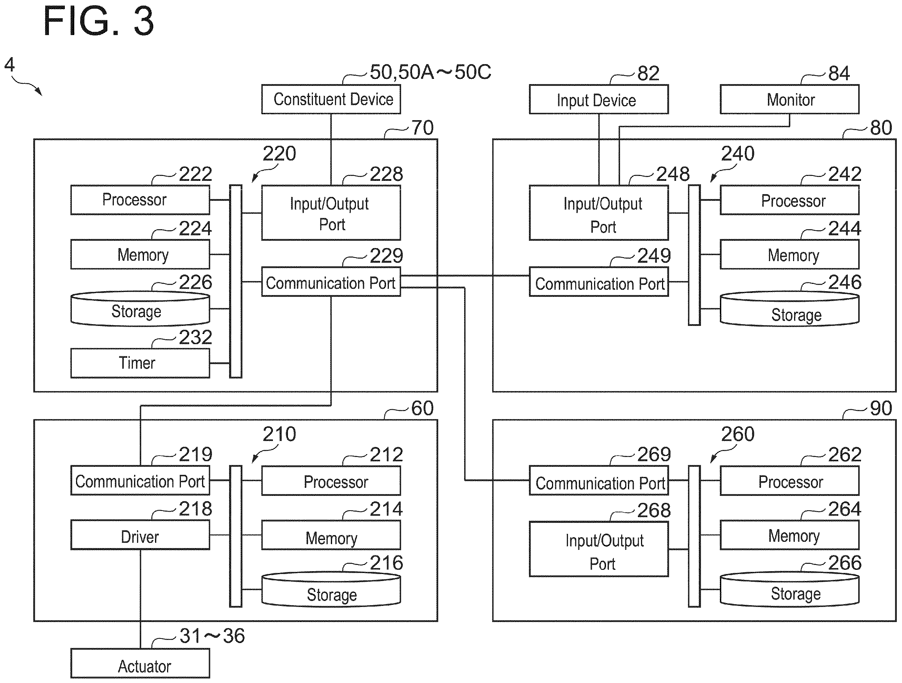

FIG. 3 illustrates an example of a hardware configuration of each of the robot control apparatus 60, the coating control apparatus 70, the setting apparatus 80, and the monitoring apparatus 90. The robot control apparatus 60 includes circuitry 210. The circuitry 210 includes at least one processor 212, memory 214, storage 216, drivers 218, and communication ports 219. The storage 216 is a non-volatile storage medium (for example, a flash memory) readable by a computer.

The memory 214 temporarily stores a program loaded from the storage 216, an operation result by the processor 212, and the like. The processor 212 constitutes each module of the robot control apparatus 60 by executing the program in cooperation with the memory 214. The driver 218 outputs driving power to the actuators 31 to 36 in response to a command from the processor 212. The communication port 219 communicates with the coating control apparatus 70 via a wireless, wired, or network line in response to a command from the processor 212.

The coating control apparatus 70 includes circuitry 220. The circuitry 220 includes at least one processor 222, memory 224, storage 226, input/output ports 228, communication ports 229, and timer 232. The storage 226 is a non-volatile storage medium (for example, a flash memory) readable by a computer. The storage 226 stores a program for causing a computer to control the coating device 42 so as to interlock with the robot 10 in response to a command from the robot control apparatus 60, acquire robot data indicating an operation state of the robot 10 interlocking with the coating device 42 from the robot control apparatus 60, and store the coating data indicating the operation state of the coating device 42 and the acquired robot data in a storage unit in association with each other.

The memory 224 temporarily stores a program loaded from the storage 226, an operation result by the processor 222, and the like. The processor 222 constitutes each module of the coating control apparatus 70 by executing the program in cooperation with the memory 224 and the input/output port 228. The input/output port 228 inputs and outputs electrical signals to and from the plurality of constituent devices 50 and the like of the coating apparatus 40 in accordance with commands from the processor 222. The input/output port 228 may include a plurality of registers (input/output registers) for inputting and outputting electrical signals to and from the constituent device 50. The plurality of input/output registers may temporarily hold data to be transmitted and received to and from the respective constituent devices 50, and may constitute the plurality of transmission data storage units 124 and the plurality of reception data storage units 126 described above.

The communication port 229 performs communication with each of the robot control apparatus 60, the setting apparatus 80, and the monitoring apparatus 90 via a wireless, wired, or network line according to a command from the processor 222. The timer 232 counts clock pulses of a predetermined cycle in response to a command from the processor 222 to measure an elapsed time.

The setting apparatus 80 includes circuitry 240. The circuitry 240 includes one or more processors 242, memory 244, storage 246, input/output ports 248, and communication ports 249. The storage 246 is a non-volatile storage medium (for example, a flash memory) readable by a computer. The storage 246 stores a program for causing a computer to designate any one of a plurality of types of coating apparatuses 40 as the control target apparatus based on a user input indicating which one of the plurality of types of coating apparatuses 40 is to be used, specify the setting parameter settable by the user according to the designation result of the control target apparatus, set the value of the setting parameter based on the user input indicating the setting value of the parameter, and transmit the designation result of the control target apparatus and the setting result of the setting parameter to the coating control apparatus 70.

The memory 244 temporarily stores a program loaded from the storage 246, an operation result by the processor 242, and the like. The processor 242 constitutes each module of the setting apparatus 80 by executing the program in cooperation with the memory 244. The input/output port 248 inputs and outputs electrical signals to and from the input device 82, the monitor 84, and the like in accordance with commands from the processor 242. The communication port 249 communicates with the coating control apparatus 70 via a wireless, wired, or network line in response to a command from the processor 242.

The monitoring apparatus 90 includes circuitry 260. The circuitry 260 includes at least one processor 262, memory 264, storage 266, input/output ports 268, and communication ports 269. The storage 266 is a non-volatile storage medium (for example, a flash memory) readable by a computer.

The memory 264 temporarily stores a program loaded from the storage 266, an operation result by the processor 262, and the like. The processor 262 constitutes a module of the monitoring apparatus 90 by executing the program in cooperation with the memory 264. The input/output port 268 inputs and outputs electrical signals to and from an input device for the monitoring apparatus 90, a monitor, and the like in accordance with commands from the processor 262. The communication port 269 communicates with the coating control apparatus 70 via a wireless, wired, or network line in response to a command from the processor 262.

Note that at least one of the circuitry 210, 220, 240, and 260 is not necessarily limited to circuitry whose functions are implemented by a program. For example, at least a part of functions of the at least one circuit may be configured by a dedicated logic circuit or an application specific integrated circuit (ASIC) in which the dedicated logic circuit is integrated.

### [Setting Method of Coating control apparatus]

Next, a series of processes executed by the setting apparatus 80 will be described as an example of a setting method of the coating control apparatus 70. This series of processing includes at least designating one of the plurality of types of coating apparatuses 40 as the control target apparatus based on a user input indicating which of the plurality of types of coating apparatuses 40 is to be used, specifying the setting parameter settable by the user according to the designation result of the control target apparatus and setting the value of the setting parameter based on the user input indicating the setting value of the parameter, and transmitting the designation result of the control target apparatus and the setting result of the setting parameter to the coating control apparatus 70.

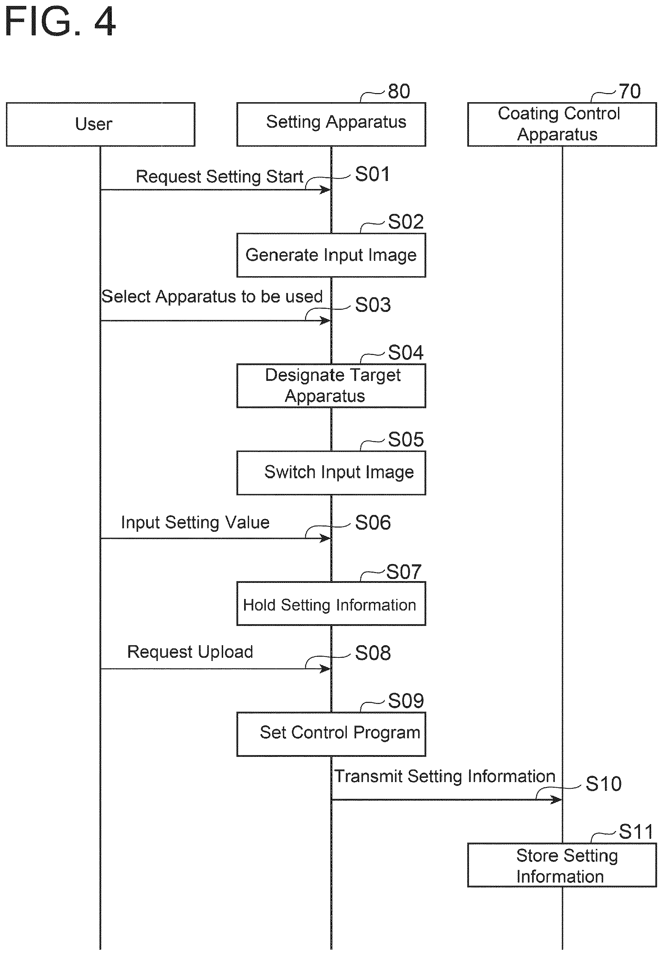

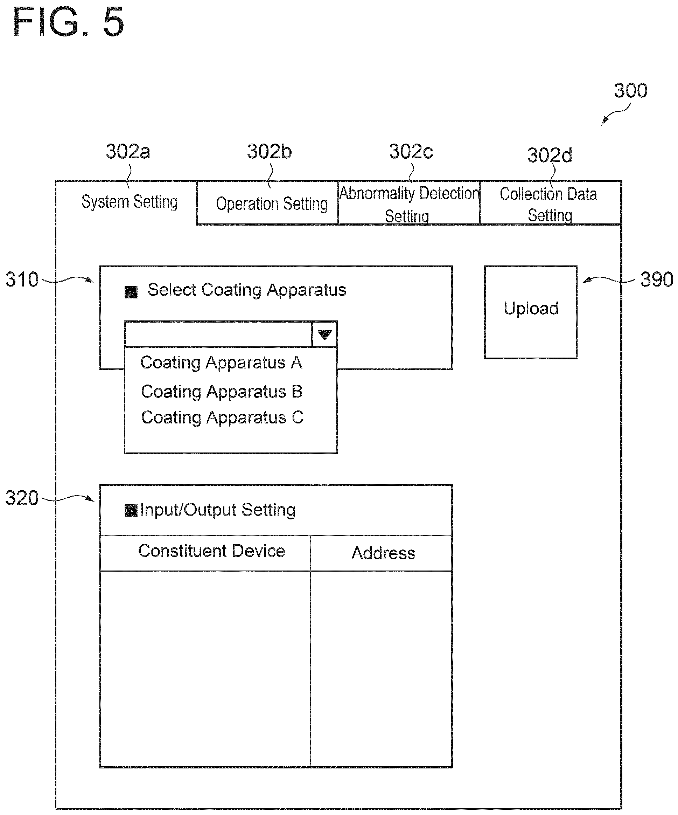

FIG. 4 is a sequence diagram illustrating a series of processes executed by the setting apparatus 80. In this series of processes, when a setting start request is received from the user (step S01), the setting apparatus 80 executes step S02. In step S02, for example, the image generation unit 148 generates (displays) an input image 300 for receiving a user input on the monitor 84. FIG. 5 shows an example of an input image 300 displayed on the monitor 84.

The input image 300 includes a plurality of tabs for switching various setting screens. FIG. 5 shows an input image 300 in a state (or an initial state) in which a tab 302a for system setting, which is one of the tabs, is selected. In the input image 300 in a state where the tab 302a is selected, a selection image 310 for selecting the type of the coating apparatus 40 to be used is displayed.

Next, when receiving a selection result of the apparatus to be used by the user (step S03), the setting apparatus 80 executes step S04. In step S04, for example, the apparatus designation unit 142 designates, as the target control apparatus, an apparatus (type) selected by an operation of the user from a plurality of types of coating apparatuses 40 indicated in a pull-down format in the selection image 310.

Next, the setting apparatus 80 executes step S05. In step S05, for example, the parameter setting unit 144 specifies the setting parameter that can be set by the user in accordance with the type of the control target apparatus specified in step S04. In one example, the parameter setting unit 144 specifies the setting parameter corresponding to the type of the control target apparatus designated in step S04 by referring to the correspondence information (correspondence table) held by the correspondence information holding unit 146. Then, the image generation unit 148 switches the display content of the input image 300 so that the specified setting parameter can be set according to the specification result of the setting parameter.

The setting parameter includes various parameters. The setting parameter includes, for example, a communication parameter. The communication parameter is a parameter for setting a connection state with the control target apparatus, and includes a transmission parameter and a reception parameter. The transmission parameter is a parameter for specifying a storage unit, among the plurality of transmission data storage units 124, into which the control command value to the constituent device 50 included in the control target apparatus is written. The reception parameter is a parameter for specifying, among the plurality of reception data storage units 126, a storage unit from which a sensor value is read from the constituent device 50 included in the control target apparatus.

In one example, the input image 300 in a state where the tab 302a is selected includes an input/output setting image 320 for setting a communication parameter. The input/output setting image 320 includes a list of the constituent devices 50 included in the designated control target apparatus and a field for inputting an address (a setting value of a communication parameter). The image generation unit 148 switches the display content of the input/output setting image 320 according to the type of the coating apparatus 40 selected in the selection image 310. The display content of the input/output setting image 320 when the coating apparatus 40A is selected (designated) is different from the display content of the input/output setting image 320 when the coating apparatus 40B (coating apparatus 40C) is selected.

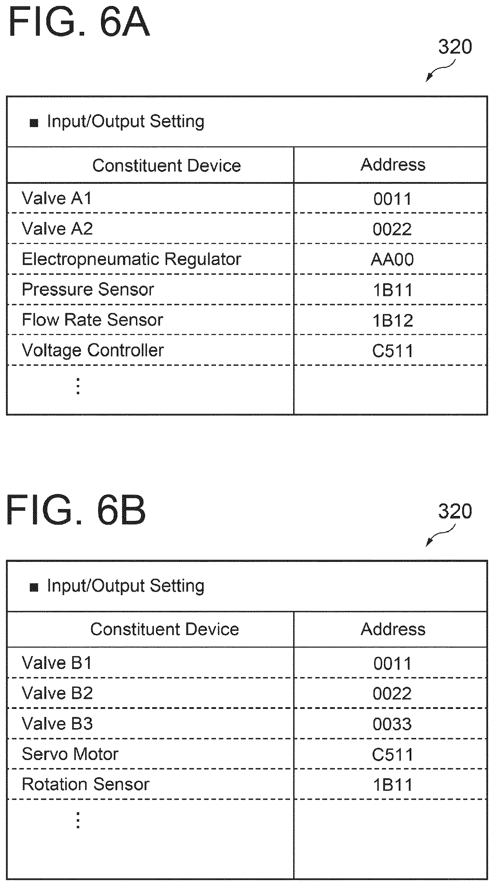

FIG. 6A shows an example of the input/output setting image 320 when the coating apparatus 40A is selected, and FIG. 6B shows an example of the input/output setting image 320 when the coating apparatus 40B is selected. Since the coating apparatus 40A and the coating apparatus 40B have mutually different constituent devices 50, the apparatuses displayed in the list of constituent devices 50 are different from each other. In this case, by operating the setting apparatus 80, the user can set input and output for a plurality of constituent devices 50A included in the coating apparatus 40A when using the coating apparatus 40A, and can set input and output for a plurality of constituent devices 50B included in the coating apparatus 40B when using the coating apparatus 40B.

Next, upon receiving an input of a setting value from the user (step S06), the setting apparatus 80 executes step S07. In step S07, the parameter setting unit 144 sets the setting parameter based on the user input indicating the setting value of the parameter, and the setting information is held. The parameter setting unit 144 may set the communication parameter based on input information of an address of each constituent device 50 displayed in the input/output setting image.

In one example, the user grasps the connection state and the communication specification between the coating control apparatus 70 and the coating apparatus 40 to be used before setting. That is, the user knows through which input/output register each of the constituent devices 50 included in the coating apparatus 40 to be used can communicate with the coating control apparatus 70 before setting. As illustrated in FIGS. 6A and 6B, the user inputs the address of the input/output register corresponding to each constituent device 50 as the setting value of the communication parameter in the input/output setting image. As a result, an input/output register is allocated to each constituent device 50.

The same address of the input/output register is set for different constituent devices when the coating apparatus 40A is selected and when the coating apparatus 40B is selected. That is, even if the type of the coating apparatus 40 to be used is different, at least some of the input/output registers can be used in common, and a plurality of types of coating apparatuses 40 can be controlled. Instead of setting the address corresponding to each constituent device 50, the user may set the communication specification, the start address, and the data size of each constituent device 50 as the communication parameter for each constituent device 50.

The setting parameters set in steps S06 and S07 are not limited to the communication parameters described above. The setting parameters include, for example, operation parameters. The operation parameter is a parameter for defining an operation of the constituent device 50 included in the control target apparatus. The operation parameter defines, for example, an operation in which a setting value can be changed in the above-described basic program. The operation parameter may include a discharge condition of the coating material discharged from the coating device 42 of the control target apparatus. The operation parameter may include a discharge condition for each color of paint that can be discharged by the coating device 42 of the control target apparatus. The discharge condition is, for example, a discharge amount of paint.

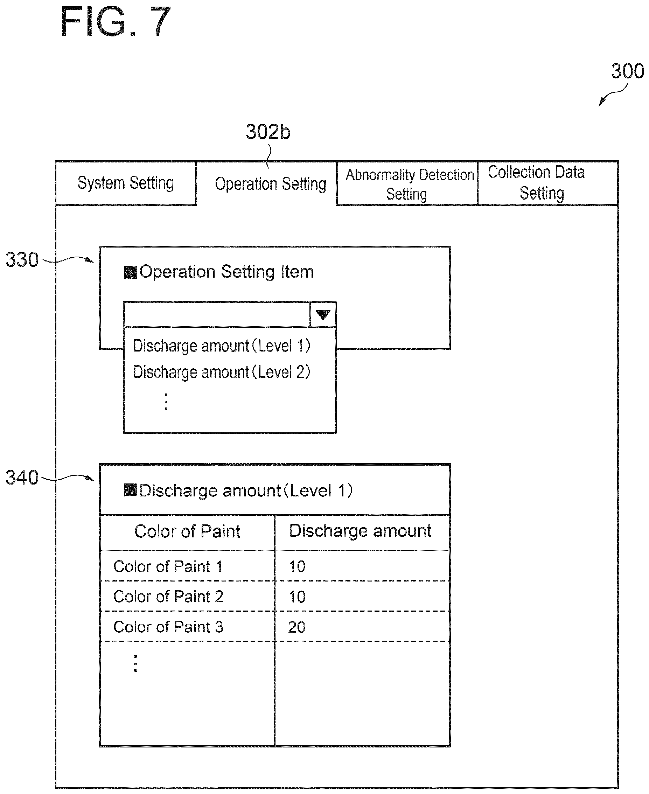

FIG. 7 shows an example of the input image 300 in a state where the tab 302b for setting the operation parameter is selected. The input image 300 in a state where the tab 302b is selected includes an item selection image 330 for selecting an operation parameter to be set and an operation setting image 340 for inputting a value of the operation parameter. In the item selection image 330, a plurality of types of operation parameters corresponding to the control target apparatus can be selected. That is, the operation parameters selectable in the item selection image 330 when the coating apparatus 40A is designated are different from the operation parameters selectable in the item selection image 330 when the coating apparatus 40B (coating apparatus 40C) is designated.

In the example shown in FIG. 7, the operation setting image 340 is replaced by the operation parameter (item) designated in the item selection image 330. When the user selects "discharge amount (level 1)" in the item selection image 330, the user can set the discharge amount for level 1 as the operation parameter in the operation setting image 340. The user can set the discharge amount as the operation parameter for each color of paint. Level 1 represents the level of the discharge amount and corresponds to the discharge level included in the discharge command from the robot control apparatus 60. For example, when a discharge command in which the discharge level is level 1 is received from the robot control apparatus 60, the control target apparatus is controlled such that the coating material is discharged at the discharge amount set for level 1.

The setting parameter includes an abnormality detection parameter. The abnormality detection parameter is a parameter for determining a level at which an abnormality of the control target apparatus is detected. In one example, the user sets, as the value of the abnormality detection parameter, a threshold value for detecting that the detection value of pressure by the pressure sensor, which is one of the constituent devices 50, has decreased. The user sets, as the value of the abnormality detection parameter, a threshold value for detecting that the number of rotations of the motor, which is one of the constituent devices 50, has reached the upper limit or the lower limit.

Although illustration is omitted, in the input image 300 in which the tab 302c for setting abnormality detection is selected, a setting image in which an abnormality detection parameter can be set is displayed. In this setting image, a plurality of types of abnormality detection parameters (items) can be set in accordance with the control target apparatus. That is, the abnormality detection parameter that can be set in the setting image when the coating apparatus 40A is designated is different from the abnormality detection parameter that can be set in the setting image when the coating apparatus 40B (coating apparatus 40C) is designated.

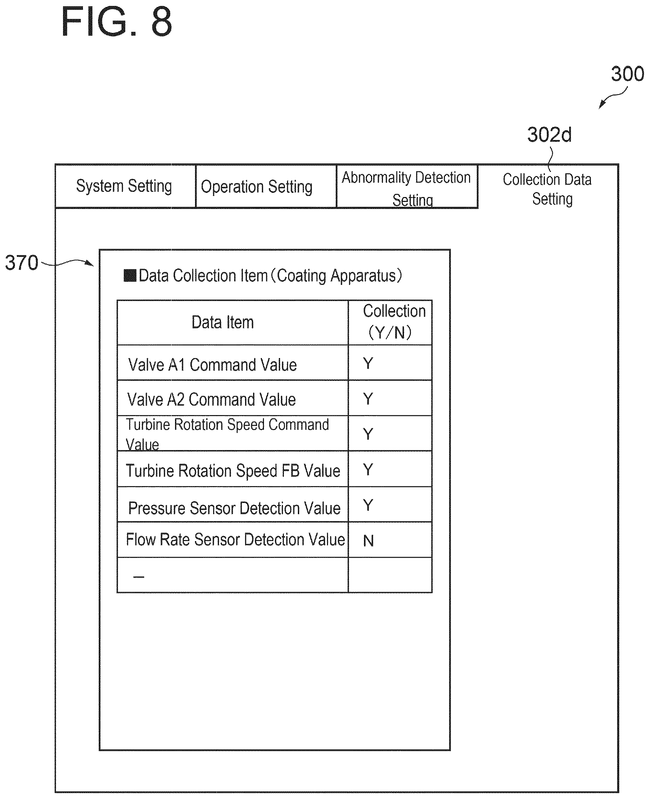

In steps S06 and S07, in addition to the setting parameter, a target item to be collected is set. FIG. 8 shows an example of the input image 300 in a state where the tab 302d for setting the target item is selected. In the input image 300 in which the tab 302d has been selected, a collection setting image 370 for setting a target item is displayed.

In the collection setting image 370, a plurality of types of data items (a list of data items) corresponding to the control target apparatus are displayed, and it is possible to set which of the plurality of types of data items is set as a target data item. That is, a list of selectable data items corresponding to the control target apparatus is displayed. The plurality of types of date items displayed in the collection setting image 370 when the coating apparatus 40A is designated are different from the plurality of types of date items displayed in the collection setting image 370 when the coating apparatus 40B (coating apparatus 40C) is designated.

The user sets whether or not each of a plurality of types of data items displayed in the collection setting image 370 is set as a data collection target. In the example illustrated in FIG. 8, in the column of "collection (Y/N)", a data item for which "Y" is input is set as a target data item, and a data item for which "N" is input is set as a data item for which data collection is not continued. The parameter setting unit 144 (item setting unit) sets a target data item to be transmitted to the monitoring apparatus 90 while continuing acquisition of data based on an input from the user to the collection setting image 370.

Returning to FIG. 4, upon receiving an upload request from the user (step S08), the setting apparatus 80 executes step S09. As shown in FIG. 5, the input image 300 in which the tab 302a is selected includes a button 390 for receiving an upload request. For example, when the user selects (clicks) the button 390, the setting apparatus 80 receives an upload request.

In step S09, for example, the execution program setting unit 152 sets one or more control programs based on the designation result of the control target apparatus in steps S03 and S04 and the setting result of the setting parameter in steps S06 and S07. In one example, the execution program setting unit 152 acquires a basic program corresponding to the designation result of the control target apparatus from a plurality of basic programs set in advance for a plurality of types of coating apparatuses 40. Then, the execution program setting unit 152 sets one or more control programs by modifying the acquired basic program (for example, by setting an argument in the basic program) according to the setting result of the operation parameter and the abnormality detection parameter.

Next, the setting apparatus 80 executes step S10. In step S10, for example, the setting transmission unit 156 transmits various kinds of setting information to the coating control apparatus 70. In one example, the setting transmission unit 156 transmits the designation result of the control target apparatus in S02 and S03, the setting result of the setting parameter in step S06 and S07, and one or more control programs set in step S09 to the setting reception unit 128 of the coating control apparatus 70.

Upon receiving the transmission of the various types of setting information , the coating control apparatus 70 executes step S11. In step S11, for example, the setting holding unit 132 of the coating control apparatus 70 holds the various types of setting information received in step S10. Through the series of processes described above, the coating control apparatus 70 becomes able to execute control on the control target apparatus target device according to the setting information set by the setting apparatus 80.

### [Control Method by Coating control apparatus]

Next, as an example of a method of controlling the control target apparatus by the coating control apparatus 70, a series of processes executed by the coating control apparatus 70 after setting by the setting apparatus 80 will be described. The series of processes includes at least controlling the coating device 42 of the control target apparatus so as to operate in conjunction with the robot 10 in response to a discharge command from the robot control apparatus 60, acquiring robot data indicating an operation state of the robot 10 from the robot control apparatus 60, and storing the coating data indicating the operation state of the coating device 42 and the acquired robot data in the storage unit in association with each other.

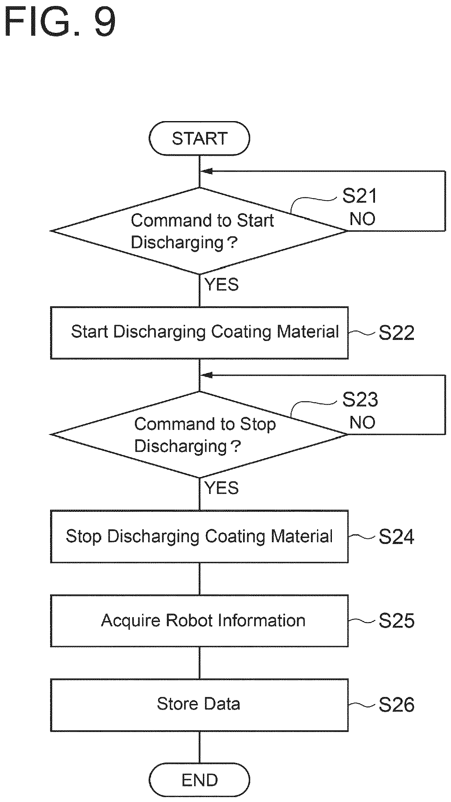

FIG. 9 is a flowchart illustrating a series of processes performed by the coating control apparatus 70 when coating is performed on one coating path (coating path). In this series of processes, the coating control apparatus 70 first executes step S21. In step S21, for example, the operation control unit 122 of the coating control apparatus 70 waits until a command to start discharging is received from the command transmission unit 114 of the robot control apparatus 60. The command transmission unit 114 of the robot control apparatus 60 may transmit the discharge start command to the coating control apparatus 70 after the coating device 42 is disposed at a position corresponding to the start position of the path of the coating target. The command to start discharging transmitted from the robot control apparatus 60 may include information indicating the color of the paint to be discharged and information indicating the level of the discharge amount of the paint.

Next, the coating control apparatus 70 executes step S22. In step S22, for example, the operation control unit 122 controls some of the constituent devices 50 of the control target apparatus such that discharge of the coating material from the coating device 42 of the control target apparatus is started. After the start of step S22, the operation control unit 122 controls some constituent devices 50 of the control target apparatus in accordance with the discharge command acquired in step S21, one or more set control programs, and the setting values of the setting parameters.

When operating the constituent device 50 of the control target apparatus, the operation control unit 112 writes the control command value to a storage unit (for example, an input/output register associated with the constituent device 50) specified by a value set by the transmission parameter among the plurality of transmission data storage units 124. When acquiring a sensor value from a constituent device 50 of the control target apparatus , the operation control unit 112 reads the sensor value from a storage unit (for example, an input/output register associated with the constituent device 50) specified by a value set by a reception parameter among the plurality of reception data storage units 126.

When controlling the control target apparatus , the operation control unit 112 operates the constituent devices 50 included in the control target apparatus in accordance with the values set in the operation parameters . For example, the operation control unit 122 operates the constituent device 50 included in the control target apparatus so that the coating material is discharged from the coating device 42 in accordance with the discharge condition set as the operation parameter.

After the start of step S22, the operation control unit 122 may continue monitoring the operation state of the control target apparatus . For example, when controlling the control target apparatus, the operation control unit 122 detects an abnormality of the control target apparatus according to a value set in the abnormality detection parameter. In one example, the operation control unit 122 detects that the operation state of the control target apparatus is abnormal when a sensor value for determining abnormality detection exceeds or falls below a threshold value set as an abnormality detection parameter.

After the start of step S22, the robot control apparatus 60 causes the actuators 31 to 36 to change the position and orientation of the coating device 42 of the control target apparatus so that the coating material is supplied along the target coating path. At this time, since the operation control unit 122 continues the discharge of the coating material from the coating device 42 of the control target apparatus, the robot 10 and the coating device 42 supply the coating material to the target coating path in conjunction with each other.

Next, the coating control apparatus 70 executes steps S23 and S24. In step S23, for example, the operation control unit 122 of the coating control apparatus 70 waits until a command to stop discharging is received from the command transmission unit 114 of the robot control apparatus 60. The command transmission unit 114 of the robot control apparatus 60 transmits a discharge stop command to the coating control apparatus 70 when the coating device 42 is disposed at a position corresponding to the end position of the path of the coating target. In step S24, for example, the operation control unit 122 controls some of the constituent devices 50 of the control target apparatus such that the discharge of the coating material from the coating device 42 of the control target apparatus 200 is stopped.

In step S25, for example, the robot information acquisition unit 134 acquires, from the robot control apparatus 60, robot data indicating the operation state of the robot 10 in the target coating path. The robot data may include data indicating operation commands of devices (for example, the actuators 31 to 36) included in the robot 10 when the robot 10 is interlocked with the coating device 42. The robot data may include data indicating operation results of devices (for example, the actuators 31 to 36) included in the robot 10 when the robot 10 is interlocked with the coating device 42.

The operation command includes, for example, target angles of the actuators 31 to 36 corresponding to a target position and a target posture of the coating device 42, and a target speed of the coating device 42. The operation result includes the detection values of the angles of the actuators 31 to 36 corresponding to the position and orientation of the coating device 42 and the moving speed of the coating device 42. The robot information acquisition unit 134 may acquire workpiece information indicating the type of the workpiece W to be coated from the robot control apparatus 60. In addition to or instead of the workpiece information, the robot information acquisition unit 134 may acquire at least one of information indicating an individual (ID) of the workpiece W and information specifying a coating path from the robot control apparatus 60.

Next, the coating control apparatus 70 executes step S26. In step S26, for example, the data processing unit 136 causes the storage unit 162 of the monitoring apparatus 90 to store, in association with each other, the coating date indicating the operation state of the coating device 42 when the discharge of the coating material is executed in steps S21 to S23 and the robot date acquired in step S25. In addition to the robot data, the data processing unit 136 may store at least one of the workpiece information, the individual information of the workpiece W, and the specific information of the coating path in the storage unit 162 in association with the coating data.

The data processing unit 136 may transmit coating data including data corresponding to the target data item set by the setting apparatus 80 (data acquired for the target data item) to the storage unit 162 after associating the coating data with the robot data. In this way, a series of processes in one coating path is completed. The coating control apparatus 70 may similarly execute a series of processes of steps S21 to S26 when the coating material is supplied to another coating path in the same workpiece W and when the coating material is supplied to each coating path in another workpiece W.

### [Monitoring Method by Monitoring apparatus]

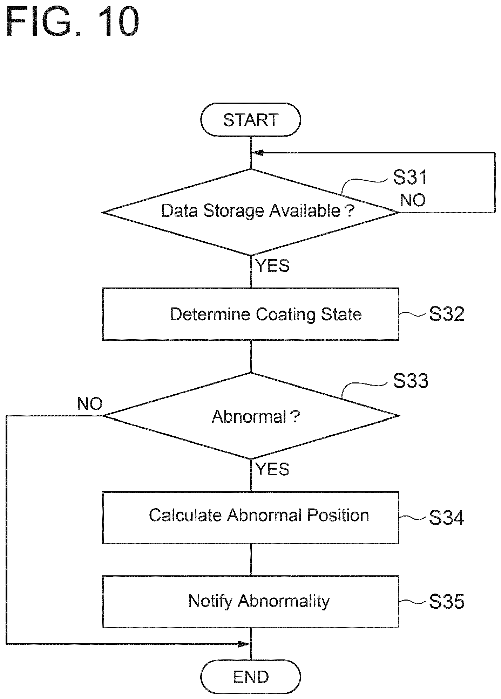

Next, as an example of a method of monitoring the execution result of the control target apparatus by the monitoring apparatus 90, a series of processes executed by the monitoring apparatus 90 after the supply of paint will be described. FIG. 10 is a flowchart illustrating a series of processes executed by the monitoring apparatus 90 after coating for one coating path is executed.

In this series of processes, the monitoring apparatus 90 first executes step S31. In step S31, for example, the state determination unit 164 waits until the storage unit 162 stores correspondence data (data in which coating data and robot data are associated with each other) for one coating path.

Next, the monitoring apparatus 90 performs step S32. In step S32, for example, the state determination unit 164 determines whether or not the coating state is normal based on the coating data and the robot data stored in the storage unit 162 immediately before step S31. In one example, the state determination unit 164 determines whether or not the state of coating is normal by inputting the coating data and the robot data to a determination algorithm held in the algorithm holding unit 178 and obtaining an output result from the determination algorithm.

Next, the monitoring apparatus 90 performs step S33. In step S33, for example, the position estimation unit 166 (or the notification unit 168) determines whether or not the determination result in step S32 is abnormal. When it is determined in step S33 that the determination result is abnormal (step S33 : YES), the monitoring apparatus 90 performs steps S34 and S35.

In step S34, for example, the position estimation unit 166 calculates a position (position on the workpiece W) at which it is estimated that the state of coating by the coating device 42 of the control target apparatus is abnormal based on the robot data stored, immediately before step S32, in the storage unit 162. In one example, the position estimation unit 166 calculates the position of the coating path where the coating state is estimated to be abnormal based on the information indicating the coating path associated with the robot data. Alternatively, the position estimation unit 166 estimates an abnormal position of the state of the coating material on the coating path based on the robot data. The position estimation unit 166 may use workpiece information indicating the type of the workpiece W when calculating the position estimated to be abnormal.

In step S35, for example, the notification unit 168 notifies information indicating that the state of coating on the workpiece W is abnormal and information indicating the estimated position calculated in step S34. The notification unit 168 may display these pieces of information on a monitor connected to the monitoring apparatus 90. Accordingly, the user (worker) can grasp that there is a possibility that an abnormality has occurred in the coating work on the workpiece W and a position where the abnormality is assumed to have occurred. After an abnormality is detected by the monitoring apparatus 90, repair of coating by a worker or re-execution or repair of coating by the robot 10 and the coating apparatus 40 may be executed.

On the other hand, when it is determined in step S33 that the state of coating is normal (step S33 : NO), the monitoring apparatus 90 does not execute steps S34 and S35. In this way, a series of processes in one coating path is completed. The monitoring apparatus 90 may similarly execute a series of processes of steps S31 to S35 when the coating material is supplied to another coating path in the same workpiece W and when the coating material is supplied to each coating path in another workpiece W. The monitoring apparatus 90 may execute a series of processes of steps S31 to S35 for each coating path after all coating operations for one workpiece W are completed, or may execute a series of processes of steps S31 to S35 for each predetermined cycle.

The above-described series of processes illustrated in FIGS. 4, 9, and 10 are examples and can be changed as appropriate. In the above-described series of processes, each of the coating control apparatus 70, the setting apparatus 80, and the monitoring apparatus 90 may execute one step and the next step in parallel or may execute each step in an order different from the above-described example. Each of the coating control apparatus 70, the setting apparatus 80, and the monitoring apparatus 90 may omit any of the steps or may execute a process different from the above-described example in any of the steps.

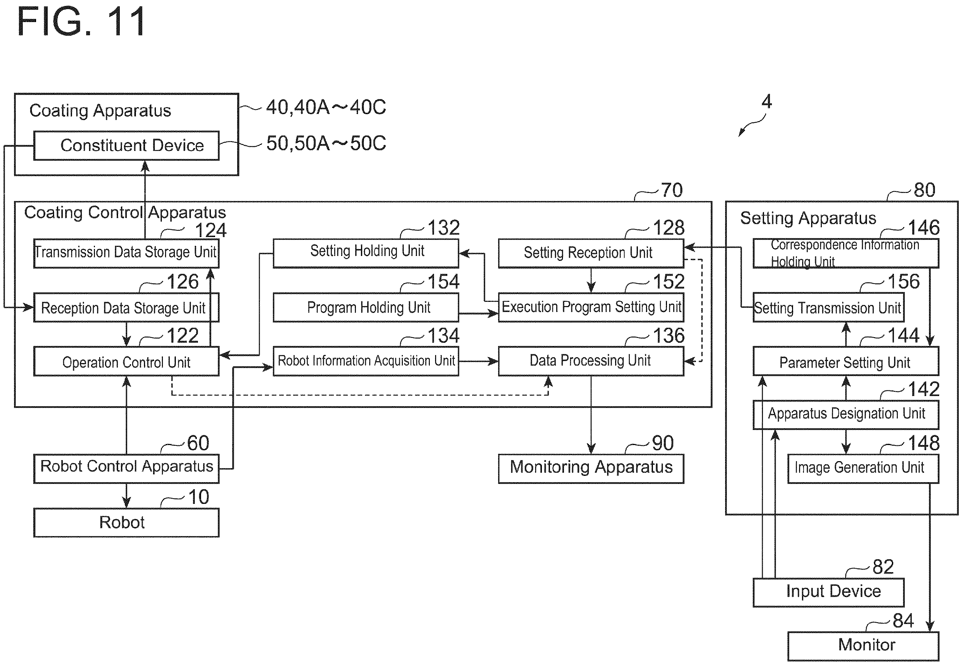

The above-described configuration of the control system 4 is an example, and the coating control apparatus 70 may include at least a part of modules included in the setting apparatus 80. For example, as illustrated in FIG. 11, the setting apparatus 80 may not include the execution program setting unit 152 and the program holding unit 154, and the coating control apparatus 70 may include the execution program setting unit 152 and the program holding unit 154.

In the example illustrated in FIG. 11, when the setting reception unit 128 of the coating control apparatus 70 receives the designation information of the control target apparatus and the setting information of the setting parameter from the setting transmission unit 156, the execution program setting unit 152 sets one or more control programs based on the designation information and the setting information. For example, in the series of processes illustrated in FIG. 4, step S08 including transmission of the setting information is step S10 including transmission of the setting information is executed. Thereafter, step S09 including the setting of the control program is executed by the execution program setting unit 152 included in the coating control apparatus 70. Before the request for uploading the step S08, the setting apparatus 80 may request the coating control apparatus 70 for information necessary for setting in accordance with the designation of the control target apparatus in the step S04, thereby acquiring information indicating items that can be set by the user such as the setting parameter.

The input image 300 illustrated in FIGS. 5 to 8 is an example, and can be appropriately changed according to the content to be set. A constituent device 50 (for example, a device configuring the peripheral device 46) having no setting in the basic program may be connected, and in this case, a program defining control for the constituent device 50 may be created in the setting apparatus 80. The setting apparatus 80 may be capable of setting the control content of the robot 10 by the robot control apparatus 60. In the above-described example, a plurality of types of coating apparatuses 40 having different coating methods are illustrated, but the plurality of types of coating apparatuses 40 may include at least two types of coating apparatuses 40 having the same coating method and different product numbers (models).

### [Effects of Embodiment]

The control system 4 according to the above-described embodiment includes an apparatus designation unit 142 that designates one of a plurality of types of coating apparatuses 40 which includes mutually different constituent devices 50 as a control target apparatus based on a user input indicating which of the plurality of types of coating apparatuses 40 is to be used, a parameter setting unit 144 that specifies user-settable setting parameters according to a designation result by the apparatus designation unit 142 and sets values of the setting parameters based on the user input indicating setting values of the parameters, and an operation control unit 122 that controls the control target apparatus based on a setting result by the parameter setting unit 144.

In a case where each of the coating apparatuses 40 of different types is controlled, it is conceivable that a dedicated control apparatus is prepared for each type and the control content is set using the dedicated apparatus for each type. In this case, it is necessary for the user to set the parameter for each coating apparatus by using the dedicated setting apparatus corresponding to the type of the coating apparatus. On the other hand, in the control system 4, a parameter that can be set is specified from among a plurality of types of coating apparatuses according to the designation result of the control target apparatus, and the value of the parameter is set. Therefore, the user can set the control content between different types of coating apparatuses by the same procedure. Accordingly, it is useful for simplifying the setting operation for control.

The control system 4 according to the embodiment described above may further include the image generation unit 148 that generates the input image 300 for inputting the value of the setting parameter in accordance with the designation result by the apparatus designation unit 142. The parameter setting unit 144 may set the value of the setting parameter based on a user input to the input image 300 generated by the image generation unit 148. In this case, even if the type of the coating apparatus 40 is different, the value of the setting parameter can be set by the same input to the input image 300. Therefore, it is useful for improving user convenience.

In the control system 4 according to the above-described embodiment, the parameter setting unit 144 may specify the setting parameter corresponding to the designation result by the apparatus designation unit 142 by referring to correspondence information in which each of the plurality of types of coating apparatuses 40 is associated with a settable parameter in advance. In this case, the processing for specifying the setting parameter according to the designation result of the control target apparatus is simplified. Therefore, it is useful for reducing the processing load of the computer.

The control system 4 according to the embodiment described above may further include an execution program setting unit 152 that sets one or more control programs based on the designation result by the apparatus designation unit 142 and the setting result by the parameter setting unit 144. The operation control unit 122 may control the control target apparatus in accordance with one or more control programs set by the execution program setting unit 152. In this case, the user sets the control target apparatus and the parameter value, thereby completing the preparation of the control program corresponding to the parameter value. This is useful for simplifying the preparation work of the control program for controlling the control target apparatus.

The control system 4 according to the above-described embodiment may further include a plurality of transmission data storage units 124 that store transmission data to the control target apparatus . The setting parameter may include a transmission parameter for specifying a storage unit, among the plurality of transmission data storage units 124, into which the control command value for the device included in the control target apparatus is written. When controlling the control target apparatus, the operation control unit 122 may write the control command value to a storage unit specified by a value set in the transmission parameter among the plurality of transmission data storage units 124. In this case, by setting the transmission parameter, the control command value can be transmitted via the same transmission data storage unit (for example, the same input/output register) to the constituent devices 50 of different types of coating apparatuses 40. Thus, it is useful for general-purpose use of a control device that controls the coating apparatus.

The control system 4 according to the above embodiment may further include a plurality of reception data storage units 126 that store reception data from the control target apparatus. The setting parameter may include a reception parameter for specifying a storage unit from which a sensor value is read from a device included in the control target apparatus among the plurality of reception data storage units 126. When controlling the control target apparatus, the operation control unit 122 may read a sensor value from a storage unit specified by a value set in a reception parameter among the plurality of reception data storage units 126. In this case, by setting the reception parameter, it is possible to acquire the sensor value via the same reception data storage unit (for example, the same input reception data storage unit (for example, the same input/output register). Thus, it is useful for general-purpose use of a control device that controls the coating apparatus.

In the control system 4 according to the above-described embodiment, the setting parameter may include an operation parameter for defining an operation of a device included in the control target apparatus . When controlling the control target apparatus, the operation control unit 122 may operate a device included in the control target apparatus in accordance with a value set in the operation parameter. In this case, even if the coating apparatuses 40 are of different types, it is possible to execute the setting that defines the operation of the equipment corresponding to each device. Accordingly, the present invention is useful for general-purpose use of a control device for controlling a coating apparatus.

In the control system 4 according to the above embodiment, the operation parameter may include the discharge condition of the coating material discharged from the control target apparatus . In this case, even with different types of coating apparatuses 40, it is possible to set the discharge conditions according to each device. Therefore, the present invention is further useful for generalizing a control device for controlling the coating apparatus.

In the control system 4 according to the embodiment described above, the operation parameter may include the discharge condition for each color of paint that can be discharged by the control target apparatus . In this case, even with different types of coating apparatuses 40, the setting of the discharge conditions can be executed for each dischargeable color corresponding to each device. Therefore, the present invention is further useful for generalizing a control device for controlling the coating apparatus.

In the control system 4 according to the embodiment described above, the setting parameter may include an abnormality detection parameter for determining a level at which an abnormality of the control target apparatus is detected. When controlling the control target apparatus, the operation control unit 122 may detect an abnormality of the control target apparatus according to a value set in the abnormality detection parameter. In this case, even with different types of coating apparatuses 40, it is possible to execute setting for abnormality detection according to each device. Thus, it is useful for general-purpose use of a control device that controls the coating apparatus.

The coating control apparatus 70 according to the above-described embodiment includes a plurality of transmission data storage units 124 for storing transmission data to a designated control target apparatus among a plurality of types of coating apparatuses 40 which includes mutually different constituent devices 50, a setting reception unit 128 for acquiring designation information indicating which of the plurality of types of coating apparatuses 40 is designated as the control target apparatus, and setting information indicating a storage unit for writing a control command value to a device included in the control target apparatus among the plurality of transmission data storage units 124, and an operation control unit for writing the control command value to a storage unit specified by the designation information among the plurality of transmission data storage units 124 when controlling the control target apparatus designated by the setting information. In the coating control apparatus 70, it is possible to transmit control command values to constituent devices of different types of coating apparatuses 40 via the same transmission data storage unit (for example, the same input/output register). Therefore, it is useful for general-purpose use of the coating control apparatus.

The coating control apparatus 70 according to the above-described embodiment includes a plurality of reception data storage units for storing received data from a designated control target apparatus among a plurality of types of coating apparatuses 40 which includes mutually different constituent devices 50, a setting reception unit 128 for acquiring designation information indicating which of the plurality of types of coating apparatuses 40 is designated as control target apparatus and setting information indicating a storage unit from which sensor values are read from a device included in control target apparatus among the plurality of reception data storage units 126, and an operation control unit 122 for reading sensor values from a storage unit specified by designation information among the plurality of reception data storage units 126 when controlling control target apparatus designated by designation information 126. In the coating control apparatus 70, sensor values can be received via the same reception data storage unit 126 (for example, the same input/output register) for the constituent devices 50 of different types of coating apparatuses 40. Therefore, it is useful for general-purpose use of the coating control apparatus.

The setting apparatus 80 according to the above-described embodiment includes an apparatus designation unit 142 that designates one of a plurality of types of coating apparatuses 40 which includes mutually different constituent devices 50 as a control target apparatus based on a user input indicating which of the plurality of types of coating apparatuses 40 is to be used, a parameter setting unit 144 that specifies setting parameters that is settable by the user according to a designation result by the apparatus designation unit 142 and sets values of the setting parameters based on the user input indicating setting values of the parameters, and a setting transmission unit 156 that transmits the designation result by the apparatus designation unit 142 and the setting result by the parameter setting unit 144 to the coating control apparatus 70 capable of controlling the plurality of types of coating apparatuses 40. In the setting apparatus 80, a parameter that can be set is specified according to the designation result of the control target apparatus, and the value of the parameter is set. Therefore, the user can set the control content between different types of coating apparatuses in the same procedure. Therefore, it is useful for simplifying the setting operation for control.

As used herein, the term "comprise" and its variations are intended to mean openended terms, not excluding any other elements and/or components that are not recited herein. The same applies to the terms "include", "have", and their variations.

As used herein, a component suffixed with a term such as "member", "portion", "part", "element", "body", and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

As used herein, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

As used herein, the phrase "at least one of A and B" is intended to be interpreted as "only A", "only B", or "both A and B".

Obviously, numerous modifications and variations of the present disclosure are possible in light of the above teachings. It is therefore to be understood that within the scope of the appended claims, the present disclosure may be practiced otherwise than as specifically described herein.

## Claims

1. A setting apparatus (80) comprising:
a selection unit (142) configured to select based on a user input a control target apparatus among a plurality of coating apparatuses (40) which include different devices (50);
a parameter setting unit (144) configured to specify a setting parameter that is to be set by a user according to a result by the selection unit (142) and set a value of the setting parameter based on a user input; and
a setting transmission unit (156) configured to transmit the result by the selection unit (142) and a setting result by the parameter setting unit (144) to a coating control apparatus (70) which is configured to control the plurality of coating apparatuses (40).

2. The setting apparatus (80) according to claim 1, further comprising:
an image generation unit (148) configured to generate an input image (300) via which the value of the setting parameter is input, wherein the parameter setting unit (144) is configured to set the value of the setting parameter based on a user input via the input image (300).

3. The setting apparatus (80) according to claim 1 or 2, wherein the parameter setting unit (144) is configured to specify the setting parameter corresponding to the control target apparatus selected by the selection unit (142) according to correspondence information which is associated with a settable parameter corresponds to each of the plurality of coating apparatuses (40).

4. A coating control apparatus (70) comprising:
a setting reception unit (128) configured to acquire, from a setting apparatus (80), information indicating a control target apparatus and a setting parameter; and
an operation control unit (122) configured to control the control target apparatus based on the value of the setting parameter.

5. The coating control apparatus (70) according to claim 4, further comprising:
a plurality of transmission data storage units (124) configured to store transmission data to be transmitted to the control target apparatus,
wherein the setting parameter includes a transmission parameter for specifying a storage unit among the plurality of transmission data storage units (124), control command values for devices (50) included in the control target apparatus being stored in the storage unit (124), and
wherein, when controlling the control target apparatus, the operation control unit (122) writes the control command values to a storage unit specified by a value set in the transmission parameter among the plurality of transmission data storage units (124).

6. The coating control apparatus (70) according to claim 4 or 5, further comprising:
a plurality of reception data storage units (126) configured to store reception data from the control target apparatus, and
wherein the setting parameter includes a reception parameter for specifying a storage unit from which a sensor value is read from a device included in the control target apparatus among the plurality of reception data storage units (126), and
wherein, when controlling the control target apparatus, the operation control unit (122) reads the sensor value from the storage unit specified by the value set in the reception parameter among the plurality of reception data storage units (126).

7. The coating control apparatus (70) according to any one of claims 4 to 6,
wherein the setting parameter includes an operation parameter for defining an operation of devices (50) included in the control target apparatus, and
wherein, when controlling the control target apparatus, the operation control unit (122) operates a device included in the control target apparatus according to a value set in the operation parameter.

8. The coating control apparatus (70) according to claim 7, wherein the operation parameter includes a discharge condition of coating material discharged from the control target apparatus.

9. The coating control apparatus (70) according to claim 8, wherein the operation parameter includes a discharge condition for each color of paint that is discharged by the control target apparatus.

10. The coating control apparatus (70) according to any one of claims 4 to 9,
wherein the setting parameter includes an abnormality detection parameter for determining a level at which an abnormality of the control target apparatus is detected, and
wherein, when controlling the control target apparatus, the operation control unit (122) detects an abnormality of the control target apparatus according to a value set in the abnormality detection parameter.

11. A coating control system (4) comprising:
the setting apparatus (70) according to any one of claims 1 to 3; and
the coating control apparatus (80) according to any one of claims 4 to 10.

12. The coating control system (4) according to claim 11,
wherein the setting apparatus (70) further comprises an execution program setting unit (152) configured to set at least one control program based on a selection result by the selection unit (142) and a setting result by the parameter setting unit (144), and
wherein the operation control unit (122) is configured to control the control target apparatus in accordance with the one or more control programs set by the execution program setting unit (152).

13. A setting method of a coating control apparatus (70), comprising:
selecting based on a user input a control target apparatus among a plurality of coating apparatuses (40) which include different devices (50);
determining a setting parameter according to the control target apparatus;
setting a value of the setting parameter based on a user input; and
transmitting a selection result of the control target apparatus and a setting result of the setting parameter to the coating control apparatus which is configured to control the plurality of coating apparatuses (40).

14. A program for causing a computer to execute the setting method according to claim 13.

15. A non-transitory computer readable storage medium retrievably storing a computer-executable program therein, the computer-executable program causing a computer to perform the setting method according to claim 13.
